(19) Europäisches Patentamt
European Patent Office
Office européen des brevets

(11) EP 3 808 197 A1

(12) **EUROPEAN PATENT APPLICATION**
published in accordance with Art. 153(4) EPC

(43) Date of publication:
21.04.2021 Bulletin 2021/16

(51) Int Cl.:
**A24F 47/00** (2020.01)

(21) Application number: 18922596.4

(22) Date of filing: 14.06.2018

(86) International application number:
PCT/JP2018/022762

(87) International publication number:
WO 2019/239548 (19.12.2019 Gazette 2019/51)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Japan Tobacco Inc.
Tokyo 105-6927 (JP)

(72) Inventors:
• AKAO, Takeshi
Tokyo 130-8603 (JP)
• TSUJI, Masayuki
Tokyo 130-8603 (JP)

(74) Representative: Hoffmann Eitle
Patent- und Rechtsanwälte PartmbB
Arabellastraße 30
81925 München (DE)

(54) **POWER-SUPPLY UNIT, AND DEVICE, METHOD AND PROGRAM FOR GENERATING FLAVOR**

(57) A power-supply unit for supplying power to an electrical load, said load vaporizing or atomizing a flavor source or an aerosol source, comprises a power-supply, a control part and a connection part which electrically connects the power-supply to the load. The control part is configured to acquire a value relating to the electrical resistance of the load, either when a prescribed time elapses after supplying power to the load or on the basis of the change rate of the value relating to the electrical resistance of the load, the temperature of the load or the pulse number of the power supplied to the load.

FIG. 7

```
        ┌─────────────────────┐
        │  POWER SUPPLY MODE   │
        └─────────────────────┘
                   │
         ◇──────────────────────◇  S200
        < IS OPERATION          >────── No
        < FOR REQUESTING         >
        < INHALATION             >
        < PERFORMED BY USER      >
        < DETECTED?              >
         ◇──────────────────────◇
                   │ Yes
        ┌─────────────────────┐
        │ ACTIVATE TIMER (T=0) │  S202
        └─────────────────────┘
                   │
        ┌─────────────────────┐
        │ START SUPPLYING      │  S204
        │ ELECTRIC POWER TO    │
        │ LOAD USING FIRST     │
        │ SWITCH               │
        └─────────────────────┘
                   │
        ┌─────────────────────┐
        │ OBTAIN OR ESTIMATE   │  S206
        │ TEMPERATURE OF LOAD  │
        └─────────────────────┘
                   │
        ┌─────────────────────┐
        │ OBTAIN OR ESTIMATE   │  S208
        │ VALUE RELATING TO    │
        │ RESISTANCE VALUE     │
        │ (R1) OF LOAD         │
        └─────────────────────┘
                   │
         ◇──────────────────────◇  S210
        < IS SUPPLY             >────── No
        < OF ELECTRIC POWER TO  >
        < LOAD TO BE STOPPED?   >
         ◇──────────────────────◇
                   │ Yes
        ┌─────────────────────┐
        │         END          │
        └─────────────────────┘
```

EP 3 808 197 A1

**Description**

TECHNICAL FIELD

The present invention relates to a power supply unit and a flavor generating device and a method and a program applied to the power supply unit and the flavor generating device.

BACKGROUND ART

Electrical vapor inhalation devices, such as electronic cigarettes, for savoring a flavor (includes aerosol) generated by atomizing a flavor source using an electrical load such as a heater are known as an alternative to cigarettes (PTL 1 and PTL 2).

PTL 1 discloses a technique for performing appropriate heating control in accordance with a type of liquid to be heated. This technique includes reading an electrical resistance value of a heating unit to identify the type of liquid and supplying electric power in an optimal manner according to the type of liquid.

PTL 2 discloses a method for measuring an electrical resistance value of a heating unit in a flavor generating device. In the method described in PTL 2, the electrical resistance value of the heating unit of a cartomizer is measured while supplying a minute current to the heating unit of the cartomizer.

CITATION LIST

PATENT LITERATURE

   PTL 1: U.S. Patent Application Publication No. 2012/0174914
   PTL 2: U.S. Patent Application Publication No. 2017/0048928

SUMMARY OF INVENTION

A first feature is a power supply unit that supplies electric power to an electrical load which vaporizes or atomizes a flavor source or an aerosol source. The power supply unit includes a power supply, a control unit, and a connection unit that electrically connects the power supply to the load. The control unit is configured to obtain a value relating to an electrical resistance value of the load after a predetermined period of time elapses since supply of electric power to the load or on a basis of a rate of change in the value relating to the electrical resistance value of the load, a temperature of the load, or a number of electric power pulses supplied to the load.

A second feature is the power supply unit according to the first feature. The control unit is configured to make a predetermined determination on a basis of the obtained value relating to the electrical resistance value of the load.

A third feature is the power supply unit according to the second feature. The predetermined determination is authentication of the load connected to the connection unit.

A fourth feature is the power supply unit according to the first or second feature, including a memory storing information that associates the value relating to the electrical resistance value of the load with the load. The control unit is configured to authenticate the load by comparing the obtained value relating to the electrical resistance value of the load with the information stored in the memory.

A fifth feature is the power supply unit according to the third or the fourth feature, including a notification unit that notifies of a result of the authentication of the load with at least one of light, sound, and vibration.

A sixth feature is the power supply unit according to any one of the third to fifth features. The control unit is configured to, if a result of the authentication of the load is abnormal, reduce or stop the electric power supplied to the load and notify of the abnormality through the notification unit.

A seventh feature is the power supply unit according to any one of the first to sixth features, including a first electric circuit configured to obtain the value relating to the electrical resistance value of the load in order to make the predetermined determination and a second electric circuit which is electrically connected to the connection unit and different from the first electric circuit.

An eighth feature is the power supply unit according to the seventh feature. An electrical resistance value of the first electric circuit is smaller than an electric resistance value of the second electric circuit.

A ninth feature is the power supply unit according to the seventh or the eighth feature. The second electric circuit includes a shunt resistor. A temperature-dependent change in an electrical resistance value of the shunt resistor is smaller than a temperature-dependent change in the electrical resistance value of the load.

A tenth feature is the power supply unit according to any one of the seventh to ninth features. The control unit is configured to obtain, using the second electric circuit, presence or absence of connection of the load to the connection unit or the value relating to the electrical resistance value of the load connected to the connection unit.

An eleventh feature is the power supply unit according to any one of the seventh to tenth features. The control unit is configured to be able to estimate a remaining amount of the aerosol source or the flavor source on a basis of the value relating to the electrical resistance value of the load obtained using the second electric circuit.

A twelfth feature is the power supply unit according to any one of the first to eleventh features, including an inhalation detection unit that detects an operation for requesting inhalation performed by a user. The control unit is configured to supply first electric power pulses capable of vaporizing or atomizing the flavor source or the aerosol source to the load on a basis of a signal from the inhalation detection unit.

A thirteenth feature is the power supply unit according to the twelfth feature. The control unit is configured to obtain the value relating to the electrical resistance value of the load by supplying the first electric power pulses to the load.

A fourteenth feature is the power supply unit according to the twelfth or thirteenth feature. The control unit is configured to obtain the value relating to the electrical resistance value of the load for every one of the first electric power pulses.

A fifteenth feature is the power supply unit according to any one of the twelfth to fourteenth features. The control unit is configured to obtain the value relating to the electrical resistance value of the load when a number of first electric power pulses reaches a predetermined value after supply of the first electric power pulses starts.

A sixteenth feature is the power supply unit according to any one of the twelfth to fifteenth features. The control unit is configured to supply second electric power pulses to the load in periods between the first electric power pulses. A current value of the second electric power pulses is smaller than a current value of the first electric power pulses.

A seventeenth feature is the power supply unit according to any one of the twelfth to sixteenth features. The control unit is configured to obtain, using the second electric power pulses, presence or absence of connection of the load to the connection unit.

An eighteenth feature is the power supply unit according to any one of the first to thirteenth features. The control unit is configured to measure the electrical resistance value of the load if a rate of change in the electrical resistance value of the load becomes lower than a predetermined threshold.

A nineteenth feature is the power supply unit according to any one of the first to thirteenth features. The control unit is configured to measure the electrical resistance value of the load if the temperature of the load reaches a temperature at which the flavor source or the aerosol source can be vaporized or atomized.

A twentieth feature is the power supply unit according to any one of the first to thirteenth features. The control unit is configured to obtain the value relating to the electrical resistance value of the load when a number of first electric power pulses capable of vaporizing or atomizing the flavor source or the aerosol source reaches a predetermined value after supply of the first electric power pulses to the load starts.

A twenty-first feature is a power supply unit that supplies electric power to an electrical load which vaporizes or atomizes a flavor source or an aerosol source. The power supply unit includes a power supply, a control unit, and a connection unit that electrically connects the power supply to the load. The control unit is configured to obtain a value relating to an electrical resistance value of the load while supplying a current capable of vaporizing or atomizing the flavor source or the aerosol source to the load.

A twenty-second feature is a flavor generating device including the power supply unit according to any one of the first to twenty-first features, the flavor source or the aerosol source, and an electrical load that vaporizes or atomizes the flavor source or the aerosol source.

A twenty-third feature is a method including a step of, after a predetermined period of time elapses since electrical connection of an electrical load that vaporizes or atomizes a flavor source or an aerosol source to a connection unit that electrically connects the load to a power supply or on a basis of a rate of change in a value relating to an electrical resistance value of the load, a temperature of the load, or a number of electric power pulses supplied to the load, obtaining the value relating to the electrical resistance value of the load, and a step of making a predetermined determination on a basis of the obtained value relating to the electrical resistance value of the load.

A twenty-fourth feature is a method including a step of obtaining a value relating to an electrical resistance value of an electrical load that vaporizes or atomizes a flavor source or an aerosol source while supplying a current capable of vaporizing or atomizing the flavor source or the aerosol source to the load and a step of making a predetermined determination on a basis of the obtained value relating to the electrical resistance value of the load.

A twenty-fifth feature is the method according to the twenty-third or twenty-fourth feature. The predetermined determination is authentication of the load connected to the connection unit.

A twenty-sixth feature is a program causing an electronic device to perform the method according to any one of the twenty-third to twenty-fifth features.

BRIEF DESCRIPTION OF DRAWINGS

Fig. 1 is a schematic diagram of a flavor generating device according to one embodiment.
Fig. 2 is a schematic diagram of an atomizing unit according to one embodiment.
Fig. 3 is a schematic diagram illustrating an example of the configuration of an inhalation sensor according to one embodiment.
Fig. 4 is a block diagram illustrating the flavor generating device.
Fig. 5 is a diagram illustrating an electric circuit of the atomizing unit and a power supply unit.
Fig. 6 is a flowchart relating to detection of attachment and removal of a load.
Fig. 7 is a flowchart illustrating an example of a control method in a power supply mode.

Fig. 8 is a graph illustrating timings of various types of control during supply of electric power to the load 121R.

Fig. 9 is a flowchart illustrating an example of a predetermined determination.

Fig. 10 is a graph illustrating changes in the temperature of the load 121R.

DESCRIPTION OF EMBODIMENTS

Embodiments will be described hereinafter. In the following description with reference to the drawings, the same or similar components are given the same or similar reference numerals. It is to be noted, however, that the drawings are schematic diagrams and ratios of dimensions and the like might differ from reality.

Specific dimensions and the like, therefore, should be determined in consideration of the following description. It is needless to say that relationships of dimensions and ratios might differ between different drawings.

[Outline of Disclosure]

As described above, PTL 2 discloses measurement of an electrical resistance value of a heating unit of a cartomizer with a minute current supplied to the heating unit of the cartomizer. When a minute current is used, however, an effect of noise upon a current value might become high. As a result, accuracy of a measured value or an estimated value of the electrical resistance value might decrease.

In addition, as the temperature of the heating unit changes due to the minute current, the electrical resistance value of the heating unit can change in accordance with the change in the temperature of the heating unit. When the electrical resistance value of the heating unit is measured or estimated while the temperature of the heating unit is rapidly changing, accuracy of the measurement or the estimation might decrease.

A method for solving at least one of the above problems is therefore desired.

According to an aspect, a power supply unit that supplies electric power to an electrical load which vaporizes or atomizes a flavor source or an aerosol source includes a power supply, a control unit, and a connection unit that electrically connects the power supply to the load. The control unit is configured to obtain a value relating to an electrical resistance value of the load after a predetermined period of time elapses since supply of electric power to the load or on a basis of a rate of change in the value relating to the electrical resistance value of the load, a temperature of the load, or a number of electric power pulses supplied to the load.

At a timing at which supply of electric power to a load starts, a change in the temperature of the load might become large, and an electrical resistance value of the load might significantly change. Therefore, a decrease in the accuracy of a measured value or an estimated value of the electrical resistance value of the load can be suppressed by obtaining a value relating to the electrical resistance value of the load after a predetermined period of time elapses since the supply of electric power to the load.

In addition, whether the electrical resistance value of the load is stable can be determined by measuring or estimating a rate of change relating to the electrical resistance value of the load, the temperature of the load, or the number of electric power pulses supplied to the load. A decrease in the accuracy of a measured value or an estimated value of the electrical resistance value of the load, therefore, can be suppressed by obtaining the value relating to the electrical resistance value of the load on the basis of the rate of change in the value relating to the electrical resistance value of the load or the temperature of the load.

According to another aspect, a power supply unit that supplies electric power to an electrical load which vaporizes or atomizes a flavor source or an aerosol source includes a power supply, a control unit, and a connection unit that electrically connects the power supply to the load. The control unit is configured to obtain a value relating to an electrical resistance value of the load while supplying a current capable of vaporizing or atomizing the flavor source or the aerosol source to the load.

In the case of a current large enough to be able to vaporize or atomize a flavor source or an aerosol source, an effect of noise upon a current value is smaller than when a minute current is used. A decrease in the accuracy of a measured value or an estimated value of the electrical resistance value, therefore, can be suppressed.

[First Embodiment]

(Flavor Generating Device)

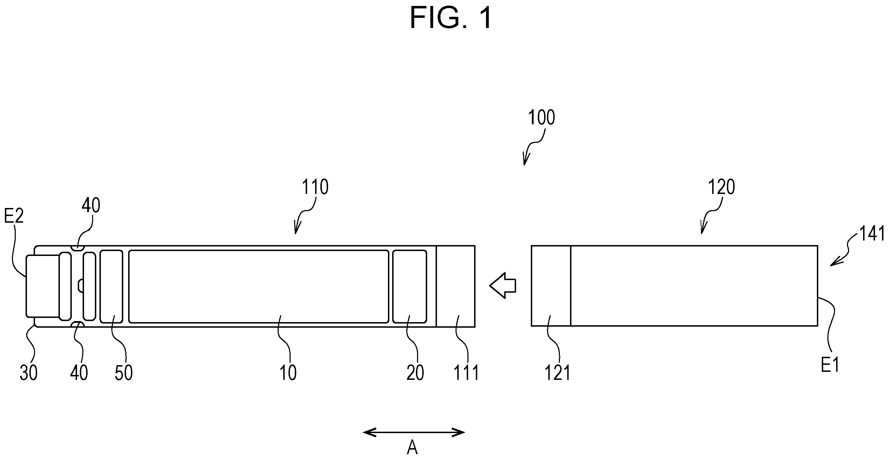

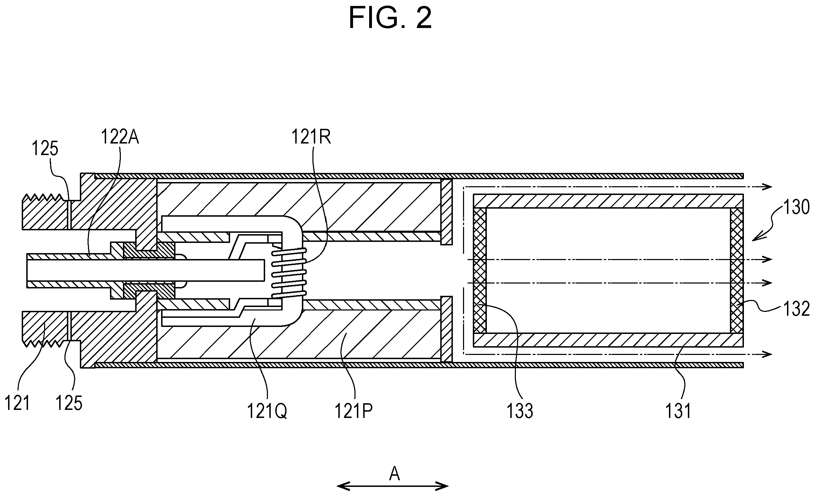

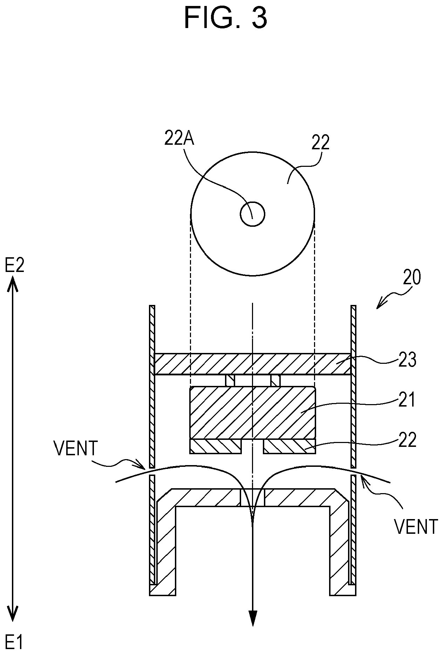

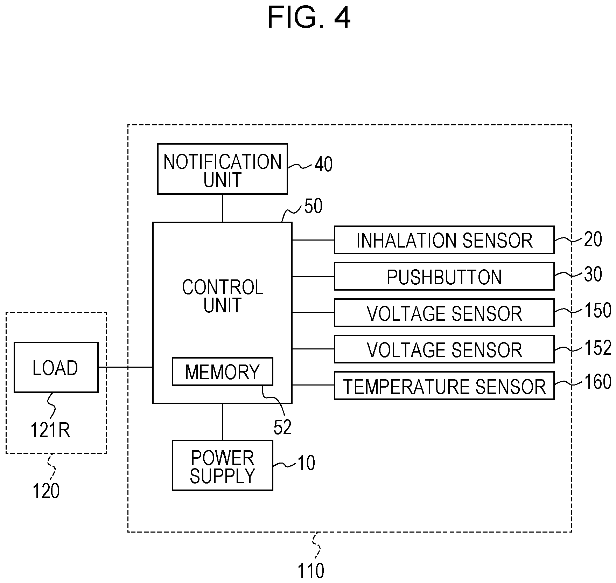

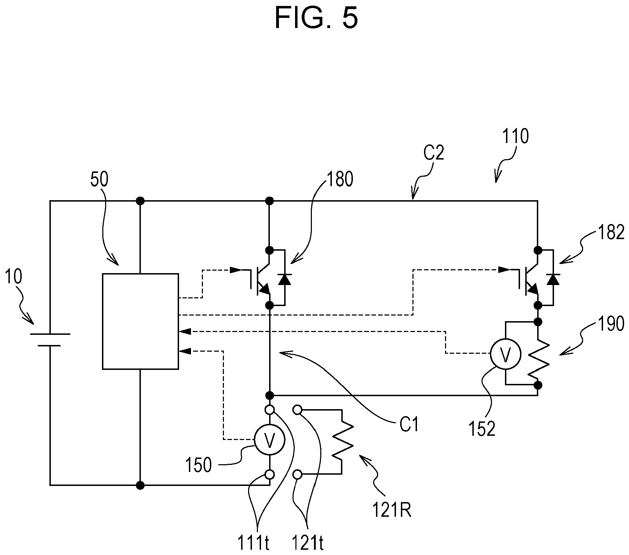

A flavor generating device according to one embodiment will be described hereinafter. Fig. 1 is an exploded view illustrating a flavor generating device according to one embodiment. Fig. 2 is a diagram illustrating an atomizing unit according to one embodiment. Fig. 3 is a schematic diagram illustrating an example of the configuration of an inhalation sensor according to one embodiment. Fig. 4 is a block diagram illustrating the electrical configuration of the flavor generating device. Fig. 5 is a diagram illustrating an electric circuit of the atomizing unit and a power supply unit.

A flavor generating device 100 may be a non-combustion-type flavor inhaler for inhaling a flavor without combustion. The flavor generating device 100 may have a shape extending in a predetermined direction A, which is a direction from a non-inhalation-port end E2 to an inhalation-port end E1. In this case, the flavor generating device 100 may include the end E1 having an inhalation port 141 for inhaling a flavor and the other end E2 opposite the inhalation port 141.

The flavor generating device 100 may include a power supply unit 110 and an atomizing unit 120. The atomizing unit 120 may be configured to be detachably attachable to the power supply unit 110 through mechanical connections 111 and 121. When the atomizing unit 120 and the power supply unit 110 are mechanically connected to each other, a load 121R, which will be described later, in the atomizing unit 120 is electrically connected, through electrical connection terminals 111t and 121t, to a power supply 10 provided for the power supply unit 110. That is, the electrical connection terminals 111t and 121t form a connection unit capable of electrically connecting the load 121R to the power supply 10.

The atomizing unit 120 includes an aerosol source inhaled by a user and the electrical load 121R that atomizes the aerosol source using electric power supplied from the power supply 10.

The load 121R may be any element capable of receiving electric power and thereby generating aerosol from an aerosol source 121P. For example, the load 121R may be a heating element such as an electric heater or an element such as an ultrasonic generator. The heating element may be a heating resistor, a ceramic heater, an induction heating type heater, or the like.

A more specific example of the atomizing unit 120 will be described hereinafter with reference to Figs. 1 and 2. The atomizing unit 120 may include a reservoir 121P, a wick 121Q, and the load 121R. The reservoir 121P may be configured to store a liquid aerosol source. The reservoir 121P may be, for example, a porous body composed of a material such as a resin web. The wick 121Q may be a liquid retention member that draws the aerosol source from the reservoir 121P by capillarity. The wick 121Q may be composed of glass fiber, porous ceramic, or the like.

The load 121R heats the aerosol source retained by the wick 121Q. The load 121R is composed of, for example, a resistive heating element (e.g., a heating wire) wound around the wick 121Q.

Air flowing from an inlet 125 through a channel 122A passes by the load 121R in the atomizing unit 120. Aerosol generated by the load 121R flows toward the inhalation port 141 along with air.

The aerosol source may be liquid at normal temperature. For example, a polyhydric alcohol may be used as the aerosol source. The aerosol source may include a tobacco raw material or an extract derived from a tobacco material that emits an inhaling flavor component when heated.

Although an example about an aerosol source that is liquid at normal temperature has been described in detail in the above-described embodiment, the aerosol source may be solid at normal temperature, instead. In this case, the load 121R may be in contact with or in proximity to the solid aerosol source in order to generate aerosol from the solid aerosol source.

The atomizing unit 120 may include a replaceable flavor unit (cartridge) 130. The flavor unit 130 may include a cylindrical body 131 storing a flavor source. The cylindrical body 131 may include a membrane member 133 and a filter 132 through which air, aerosol, and the like can pass. The flavor source is provided in a space defined by the membrane member 133 and the filter 132.

According to an example of a preferred embodiment, the flavor source inside the flavor unit 130 gives an inhaling flavor component to aerosol generated by the load 121R of the atomizing unit 120. A flavor given by the flavor source to the aerosol is conveyed to the inhalation port 141 of the flavor generating device 100.

The flavor source inside the flavor unit 130 may be solid at normal temperature. For example, the flavor source is composed of an ingredient piece of a plant material that gives an inhaling flavor component to aerosol. The ingredient piece that forms the flavor source may be a tobacco material shaped into grains, such as shredded tobacco or a tobacco ingredient. Alternatively, the flavor source may be a tobacco material shaped into a sheet form. In addition, the ingredient piece that forms the flavor source may be a plant other than tobacco (e.g., mint, an herb, etc.). A flavor such as menthol may be added to the flavor source.

The flavor generating device 100 may include a mouthpiece having an inhalation port for a user to inhale an inhalation component. The mouthpiece may be configured to be detachably attachable to the atomizing unit 120 or the flavor unit 130, or may be integral with the atomizing unit 120 or the flavor unit 130.

The power supply unit 110 may include the power supply 10, a notification unit 40, and a control unit 50. The power supply 10 accumulates electric power necessary to operate the flavor generating device 100. The power supply 10 may be detachably attachable to the power supply unit 110. The power supply 10 may be, for example, a rechargeable battery such as a lithium-ion secondary battery.

The flavor generating device 100 may include an inhalation sensor 20, a pushbutton 30, voltage sensors 150 and 152, and a temperature sensor 160. The voltage sensor 150 may be configured to measure or estimate a potential difference between the pair of connection terminals 111t. The voltage sensor 152 may be configured to measure or estimate a decrease in the voltage of a shunt resistor 152, which will be described later. The temperature sensor 160 may be configured to measure or estimate the temperature of the load 121R. The temperature sensor 160 may be provided near the load 121R.

The control unit 50 may perform various types of control necessary for the operation of the flavor generating device 100 in accordance with output values of the voltage sensor 150. For example, the control unit 50 controls electric power supplied from the power supply 10 to the load 121R. In addition, the control unit 50 may include a memory 52 storing information necessary to perform various types of control necessary for the operation of the flavor generating device 100.

When the atomizing unit 120 is connected to the power supply unit 110, the load 121R provided for the atomizing unit 120 is electrically connected to the power supply 10 of the power supply unit 110 (refer to Fig. 5).

The flavor generating device 100 may include a first switch 180 and a second switch 182 capable of electrically connecting and disconnecting the load 121R to or from the power supply 10. The first switch 180 and the second switch 182 are each opened and closed by the control unit 50. The first switch 180 and the second switch 182 may be comprised of, for example, MOSFETs. When at least either the first switch 180 or the second switch 182 is turned on, an electrical path from the power supply to the load 121R is established, and the power supply 10 supplies electric power to the load 121R.

The power supply unit 110 may include determination means for determining whether the load 121R is connected to the electrical terminals 111t. The determination means may make the determination as to the presence or absence of the connection to the load 121R on the basis of, for example, a potential difference between the pair of electrical terminals 111t or an electrical resistance value.

As a specific example, as illustrated in Fig. 5, the power supply unit 110 may include a first electric circuit C1 configured to obtain a value relating to the electrical resistance value of the load 121R and a second electric circuit C2 which is electrically connected to the connection unit 111t and different from the first electric circuit C1. The first electric circuit C1 includes the first switch 180, and the second electric circuit 2 includes the second switch 182. Here, the second electric circuit C2 may be connected in parallel with the first electric circuit C1 in relation to the power supply 10.

Among the electric circuits illustrated in Fig. 5, the first electric circuit C1 is a circuit that stems from a cathode of the power supply 10 and returns to an anode of the power supply 10 via the first switch 180 and the load 121R. The second electric circuit C2 is a circuit that stems from the cathode of the power supply 10 and returns to the anode of the power supply 10 via the second switch 182, a shunt resistor 190, and the load 121R. The second switch 182 and the shunt resistor 190 are connected in parallel with the first switch 180 in relation to the power supply 10.

An electrical resistance value of the first electric circuit C1 is smaller than an electrical resistance value of the second electric circuit C2. Since the second electric circuit C2 includes the shunt resistor 190 in the example illustrated in Fig. 5, the electrical resistance value of the second electric circuit C2 is larger than that of the first electric circuit C1 by an electrical resistance value of the shunt resistor 190.

When the first switch 180 is on and the second switch 182 is off, a relatively large current flows into the load 121R. In the present embodiment, when the first switch 180 is on, a current capable of vaporizing or atomizing the flavor source or the aerosol source flows into the load 121R. When the second switch 182 is on, a relatively small current flows into the load 121R. In the present embodiment, when the second switch 182 is on, a current that is not large enough to vaporize or atomize the flavor source or the aerosol source preferably flows into the load 121R. When the second switch 182 is on and the first switch 180 is off, a relatively small current flows into the load 121R. When both the first switch 180 and the second switch 182 are off, no current flows into the load 121R.

The control unit 50 may include an inhalation detection unit configured to detect an operation for requesting inhalation performed by the user. The inhalation detection unit may be, for example, the pushbutton 30 to be pushed by the user, or the inhalation sensor 20 configured to detect an inhalation action performed by the user. If the inhalation detection unit detects an operation for requesting inhalation, the control unit 50 generates a command to operate the load 121R. In a specific example, the control unit 50 outputs a command to operate the load 121R to the first switch 180, and the first switch 180 is turned on in accordance with the command.

More specifically, the control unit 50 preferably supplies electric power to the load 121R in the form of electric power pulses by repeatedly turning on and off the first switch 180. The control unit 50 is thus configured to supply, to the load 121R, first electric power pulses capable of vaporizing or atomizing the aerosol source on the basis of a signal from the inhalation detection unit. When the power supply 10 supplies electric power to the load 121R, the load 121R vaporizes or atomizes the aerosol source.

The inhalation sensor 20 may be configured to output an output value that varies in accordance with inhalation from the inhalation port. More specifically, the inhalation sensor 20 may be a sensor that outputs a value (e.g., a voltage value or a current value) that varies in accordance with a flow rate of air inhaled from a non-inhalation-port side to an inhalation-port side (i.e., the user's puff action). Such a sensor may be, for example, a condenser microphone sensor, a known flow sensor, or the like.

Fig. 3 illustrates a specific example of the inhalation sensor 20. The inhalation sensor 20 illustrated in Fig. 3 includes a sensor body 21, a cover 22, and a substrate 23. The sensor body 21 is comprised of, for example, a capacitor. An electrical capacitance of the sensor body 21 varies depending on vibration (pressure) generated by air inhaled from the inlet 125 (i.e., air inhaled from the non-inhalation-port side toward the inhalation-port side). The cover 22 is provided on the inhalation-port side with respect to the sensor body 21 and includes an opening 22A. Providing the cover 22 including the opening 22A allows the electrical capacitance of the sensor body 21 to change easily, thus improving a response characteristic of the sensor body 21. The substrate 23 outputs a value (here, a voltage value) indicating the electrical capacitance of the sensor body 21 (capacitor).

The notification unit 40 issues notifications for giving various types of information to the user. The notification unit 40 may be a light-emitting device that emits light, such as an LED. Alternatively, the notification unit 40 may be a device that emits sound or a vibrator that causes vibration. Alternatively, the notification unit 40 may be composed of a combination of devices that emit light, sound, or vibration.

The flavor generating device 100, that is, more specifically, the power supply unit 110, may be configured to be connectable to a charger that charges the power supply 10 of the power supply unit 110. When the charger is connected to the power supply unit 110, a charger 200 is electrically connected to the power supply 10 of the power supply unit 110. A pair of electrical terminals of the power supply unit 110 for electrically connecting the charger may be the pair of the electrical terminals 111t of the power supply unit 110 for electrically connecting the load 121R. Alternatively, the pair of electrical terminals of the power supply unit 110 for electrically connecting the charger may be separately provided from the pair of electrical terminals 111t.

The power supply unit 110 may include a remaining amount estimation unit that estimates a remaining amount of the aerosol source provided for the atomizing unit 120. In the present embodiment, the remaining amount estimation unit is composed of the above-described second electric circuit C2. More specifically, the remaining amount estimation unit includes the second switch 182, the shunt resistor 190, and the voltage sensor 152.

As illustrated in Fig. 5, the shunt resistor 190 is electrically connected in series with the load 121R. The voltage sensor 152 is connected in parallel with the shunt resistor 190. The voltage sensor 152 is capable of measuring or estimating a decrease in the voltage of the shunt resistor 190. The voltage sensor 152 outputs, to the control unit 50, a measured value of the amount of decrease in the voltage of the shunt resistor 190.

The remaining amount estimation unit estimates the remaining amount of the aerosol source on the basis of the temperature of the load 121R. A current value Is flowing into the shunt resistor 190 is obtained from the following expression (1).

$$Is = Vs/Rs \quad ...(1)$$

Here, Vs denotes the amount of decrease in the voltage of the shunt resistor 190, and Rs denotes the electrical resistance value of the shunt resistor 190. A current value flowing into the load 121R connected in series with the shunt resistor 190 is the same as Is.

An output value Vo of the voltage of the power supply 10 is obtained from the following expression (2).

$$Vo = Is \times (Rs + Rh) \quad ...(2)$$

Here, Rh denotes the electrical resistance value of the load 121R. The electrical resistance value Rh of the load 121R is calculated or estimated from the following expression, which is based on expressions (1) and (2).

$$Rh = Rs \times (Vo - Vs)/Vs \quad ...(3)$$

The resistance value Rs of the shunt resistor 190 is known. The control unit 50, therefore, can calculate or estimate the electrical resistance value Rh of the load 121R from the resistance value Rs of the shunt resistor 190, the amount Vs of decrease in voltage obtained by the voltage sensor 152, and the output value Vo of the power supply 10.

The load 121R may have a positive temperature coefficient (PTC) characteristic and an electrical resistance value Rh in substantially direct proportion to the temperature of the load 121R. The control unit 50, therefore, can estimate the temperature of the load 121R on the basis of the electrical resistance value Rh of the load 121R.

A temperature-dependent change in the electrical resistance value of the shunt resistor 190 is preferably smaller than a temperature-dependent change in the electrical resistance value of the load 121R. In this case, the accuracy of an estimated value of the temperature of the load 121R calculated using expression (3) improves. More preferably, the shunt resistor 190 has a substantially constant electrical resistance value within a range of use temperature of the flavor generating device.

A correlation between the remaining amount of the aerosol source and the electrical resistance value of the load 121R may be determined through a preliminary experiment. A result of the experiment is stored, for example, in the memory 52. As a result, the control unit 50 can estimate the remaining amount of the aerosol source on the basis of comparison between the result of the experiment stored in the memory 52 and an estimated temperature of the load 121R.

When estimating the remaining amount of the aerosol source, the control unit 50 turns on the second switch 182 and obtains the amount of decrease in the voltage of the shunt resistor 190 using the above-described second electric circuit C2. When estimating the remaining amount of the aerosol source in this manner, the control unit 50 preferably estimates the amount of decrease in the voltage of the shunt resistor 190, that is, the electrical resistance value of the load 121R, using a minute current. In this case, the control unit 50 can estimate the remaining amount of the aerosol source while saving energy.

As described above, the control unit 50 is configured to be able to estimate the remaining amount of the aerosol source on the basis of the electrical resistance value of the load 121R. Alternatively, the control unit 50 may be configured to be able to estimate the remaining amount of the aerosol source on the basis of a value relating to the electrical resistance value of the load 121R. Here, the value relating to the electrical resistance value may be the resistance value (Rh) itself of the load 121R or another physical quantity that can be converted into the resistance value (Rh) of the load 121R. The other physical quantity that can be converted into the resistance value (Rh) of the load 121R may be, for example, a voltage applied to the load 121R, that is, a potential difference between the pair of the connection terminals 111t with the load 121R connected. Alternatively, the other physical quantity that can be converted into the resistance value (Rh) of the load 121R may be a current value that passes through the load 121R. Alternatively, the other physical quantity that can be converted into the resistance value (Rh) of the load 121R may be the temperature of the load 121R. The control unit 50 may be configured to be able to estimate not only the remaining amount of the aerosol source but also the remaining amount of the flavor source, instead.

In the above-described example, the remaining amount estimation unit is configured to estimate the remaining amount of the aerosol source by measuring the temperature of the load 121R from the resistance value of the shunt resistor 190. Alternatively, the remaining amount estimation unit may be configured to estimate the remaining amount of the aerosol source by obtaining the electrical resistance value of the load 121R and measuring the temperature of the load 121R from the obtained electrical resistance value of the load 121R. In this case, the electrical resistance value of the load 121R is represented by the following expression (3) using the known electrical resistance value of the shunt resistor 190, a voltage value (potential difference) Vh applied to the load 121R, and the output voltage value Vo of the power supply 10.

$$Rh = Rs \times Vh/(Vo - Vh) \ldots(3)$$

The voltage value (potential difference) Vh applied to the load 121R can be obtained by the voltage sensor 150.

As described above, the remaining amount of the aerosol source can be estimated by estimating the temperature of the load 121R from the electrical resistance value of the load 121R.

(Detection of Attachment and Removal of Load)

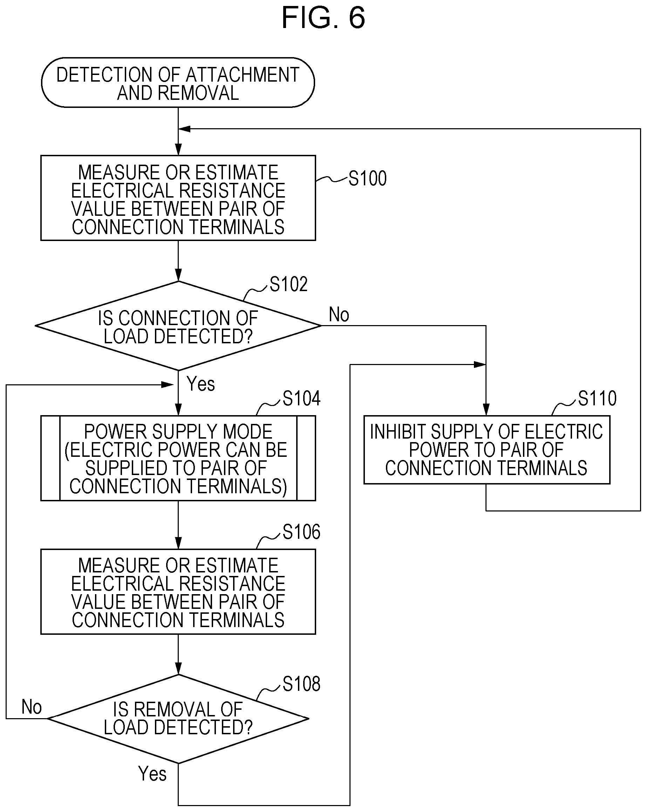

Fig. 6 is a flowchart relating to detection of attachment and removal of the load 121R. First, the control unit 50 measures or estimates the electrical resistance value between the pair of the connection terminals 111t to which the electrical load 121R is to be connected (step S100). The electrical resistance value can be calculated, for example, on the basis of the potential difference between the pair of connection terminals 111t measured by the voltage sensor 150.

In detection of the connection of the load 121R, it is sufficient that the control unit 50 can detect a relatively large change in the potential difference between the pair of connection terminals 111t. It is therefore not necessary to accurately detect an absolute value of the potential difference between the pair of connection terminals 111t. In order to detect the connection of the load 121R while saving energy, the amount of current supplied to the pair of connection terminals 111t from the power supply 10 is preferably reduced in the detection of the connection of the load 121R. From this point of view, step S100 is preferably performed with the first switch 180 turned off and the second switch 182 turned on.

Next, the control unit 50 detects whether the load 121R has been connected on the basis of the electrical resistance value measured or estimated in step S100 (step S102). If determining that the load 121R has not been connected, the control unit 50 inhibits supply of electric power to the pair of connection terminals 111t (step S110).

The control unit 50 can inhibit the supply of electric power to the pair of connection terminals 111t by turning off both the first switch 180 and the second switch 182. The inhibition of the supply of electric power to the pair of connection terminals 111t continues until the electrical resistance value between the pair of connection terminals 111t is measured or estimated again or until the connection of the load 121R is detected again.

If determining that the load 121R has been connected to the pair of connection terminals 111t, the control unit 50 enters a power supply mode (steps S102 and S104). Here, the power supply mode is a mode in which electric power can be supplied to the pair of connection terminals 111t. If the user pushes the pushbutton 30 or the inhalation sensor 20 detects an inhalation action performed by the user in the power supply mode, the control unit 50 turns on the first switch 180 to start supplying electric power to the load 121R.

In the power supply mode, too, the control unit 50 may measure or estimate the electrical resistance value of the electrical load 121R connected between the pair of connection terminals 111t (step S106). As with step S100, step S106 is preferably performed, with the first switch 180 turned off and the second switch 182 turned on. After step S106, the control unit 50 may detect whether the load 121R has been removed on the basis of the electrical resistance value measured or estimated in step S106 (step S108).

If determining that the load 121R has been removed, the control unit 50 inhibits the supply of electric power to the pair of connection terminals 111t (step S110). In this case, the control unit 50 may regularly measure or estimate the electrical resistance value between the pair of connection terminals 111t to which the electrical load 121R is to be connected, in order to detect the connection of the load 121R again.

If determining in step S108 that the load 121R has been connected, the control unit 50 may continue the power supply mode.

(Power Supply Mode)

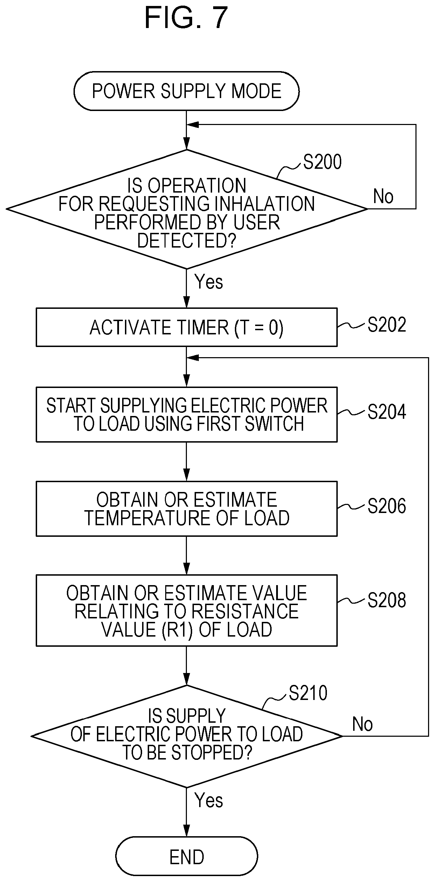

Fig. 7 is a flowchart illustrating an example of a control method used by the flavor generating device in the power supply mode. A control flow illustrated in Fig. 7 is performed by the control unit 50. The power supply mode is a mode in which the power supply 10 can supply electric power to the load 121R. The power supply mode can be performed at least when the atomizing unit 120 is connected to the power supply unit 110. The control unit 50 may enter the power supply mode if the connection of the load 121R to the connection unit 111t is detected.

The control unit 50 determines whether an operation for requesting inhalation performed by the user has been detected in the power supply mode (step S200). As described above, the operation for requesting inhalation can be detected by the inhalation sensor 20 or the pushbutton 30.

The control unit 50 controls the first switch 180 on the basis of a signal from the inhalation detection unit, such as the inhalation sensor 20 or the pushbutton 30, in such a way as to start supplying electric power to the load 121R (step S204). As a result, the control unit 50 supplies a plurality of first electric power pulses capable of atomizing the aerosol source to the load 121R.

The control unit 50 adjusts the first electric power pulses to be supplied to the load 121R from the power supply 10 through, for example, pulse-width modulation (PWM) control. A duty ratio relating to pulse width may be lower than 100%. Alternatively, the control unit 50 may control the amount of electric power supplied to the load 121R from the power supply 10 through pulse-frequency modulation (PFM) control, instead of pulse-width control. Pulse-width modulation and pulse-frequency modulation can be performed by turning on and off the first switch 180.

The control unit 50 may vary the electric power to be supplied to the load 121R in accordance with a type of load 121R (atomizing unit 120) connected to the pair of connection terminals 111t. For example, the control unit 50 may supply electric power pulses to the load 121R with a duty ratio according to the type of load 121R (atomizing unit 120).

More specifically, when the electrical resistance value of the load 121R is large, the control unit 50 can keep the electric power supplied to the load 121R from becoming low by setting a high duty ratio. When the electrical resistance value of the load 121R is small, on the other hand, the control unit 50 can keep the electric power supplied to the load 121R from becoming too high by setting a low duty ratio. In particular, when the load 121R is an electric heater, the control unit 50 can prevent overheating and insufficient heating through the control of the duty ratio.

Alternatively, when the electrical resistance value of the load 121R is large, the control unit 50 may reduce the electric power supplied to the load 121R by setting a low duty ratio. Similarly, when the electrical resistance value of the load 121R is small, the control unit 50 may increase the electric power supplied to the load 121R by setting a high duty ratio. In this case, the electric power supplied to the load 121R can be appropriately varied in accordance with a characteristic or the type of load 121R.

The control unit 50 may activate a timer as necessary before turning on the first switch 180 (step S202). In this case, the timer can count time that has elapsed since the supply of electric power to the load 121R started.

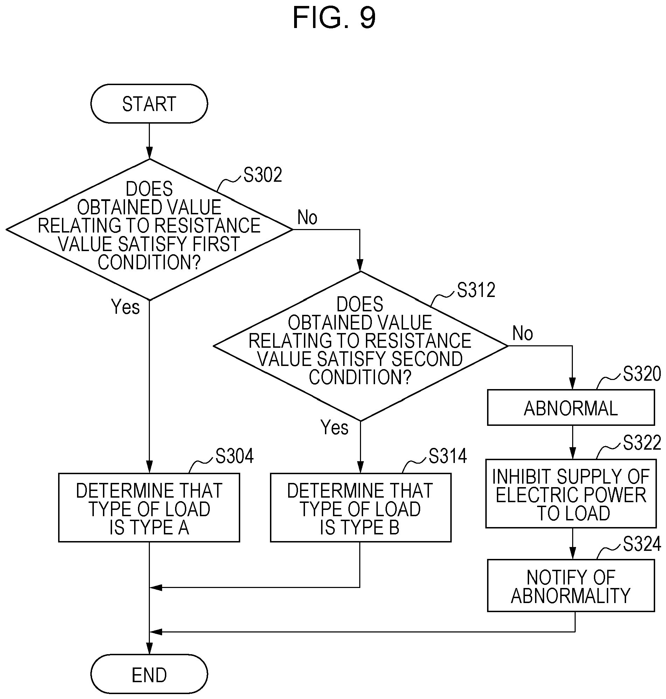

In addition, the control unit 50 may, while controlling the electric power supplied to the load 121R, obtain or estimate the temperature of the load 121R (step S206) and obtain or estimate a value relating to the resistance value (Rh) of the load 121R (step S208). The control unit 50 may obtain or estimate the temperature and obtain or estimate a value relating to the resistance value (Rh) of the load 121R a plurality of times at any timings while continuing control of the supply of electric power to the load 121. In addition, as described later, the control unit 50 is configured to make a predetermined determination on the basis of the value relating to the electrical resistance value of the load 121R obtained in step S208 (refer to Fig. 9).

In step S208, the control unit 50 obtains the value relating to the electrical resistance value of the load 121R while allowing a current capable of vaporizing or atomizing the flavor source or the aerosol source to flow through the load 121R. That is, step S208 is performed using the value relating to the resistance value (Rh) of the load 121R obtained by turning on the first switch 180.

The value relating to the resistance value (Rh) of the load 121R may be the resistance value (Rh) itself of the load 121R or another physical quantity that can be converted into the resistance value (Rh) of the load 121R. The other physical quantity that can be converted into the resistance value (Rh) of the load 121R may be, for example, a voltage applied to the load 121R, that is, a potential difference between the pair of the connection terminals 111t in a state in which the load 121R is connected. Alternatively, the other physical quantity that can be converted into the resistance value (Rh) of the load 121R may be a current value that passes through the load 121R.

The temperature of the load 121R can be obtained by the above-described temperature sensor 160.

Alternatively, the temperature of the load 121R may be estimated from the resistance value of the load 121R. Since it is known that the resistance value of the load 121R simply varies depending on the temperature, the temperature of the load 121R can be easily estimated from the resistance value of the load 121R.

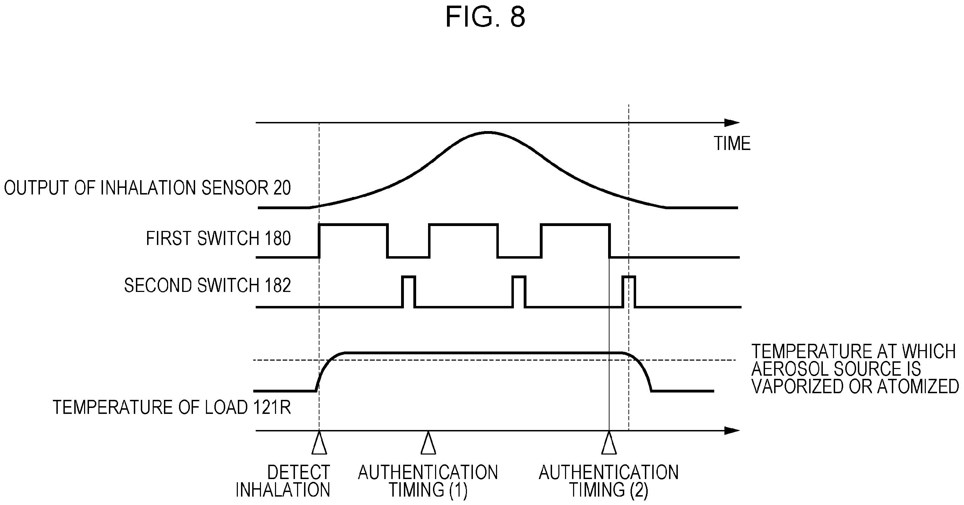

Fig. 8 is a graph illustrating timings of various types of control during the supply of electric power to the load 121R. In a mode illustrated in Fig. 8, the inhalation sensor 20 detects an inhalation action (an increase in the flow rate within the channel) performed by the user, and the control unit 50 starts supplying electric power to the load 121R using the first switch 180. More specifically, the control unit 50 supplies a plurality of first electric power pulses capable of vaporizing or atomizing the flavor source or the aerosol source to the load 121R by controlling the first switch 180.

The control unit 50 may be configured to supply second electric power pulses to the load 121R in periods between the first electric power pulses using the first switch 180 (refer to Fig. 8). A current value of the second electric power pulses is smaller than a current value of the first electric power pulses. More specifically, the second electric power pulses are supplied to the load 121R when the second switch 182 is turned on.

The control unit 50 may be configured to obtain a value relating to the electrical resistance value of the load 121R connected to the connection unit 111t using the second electric power pulses supplied using the second switch 182. As a result, the control unit 50 can detect presence or absence of the connection of the load 121R, that is, removal of the load 121R, even while supplying electric power to the load 121R.

In addition, the control unit 50 may detect the remaining amount of the aerosol source as described above using the second electric power pulses supplied using the second switch 182. If determining that the aerosol source has run out, the control unit 50 may notify the user using the notification unit 40 and stop supplying electric power to the load 121R using the first switch 180.

If determining that the supply of electric power to the load 121R is to be stopped, the control unit 50 turns off the first switch 180 (step S210). If a timing to stop supplying electric power to the load 121R has not yet come, the control unit 50 continues to supply electric power to the load 121R using the first switch 180.

The stop of the supply of electric power to the load 121R can be determined, for example, by detecting an end of an operation for requesting inhalation performed by the user. The end of the operation for requesting inhalation may be determined, for example, at a timing at which the inhalation sensor 20 detects an end of an inhalation action performed by the user. Alternatively, the end of the operation for requesting inhalation may be determined at a timing at which cancelation of pushing on the pushbutton 30 is detected.

Alternatively, the stop of the supply of electric power to the load 121R can be determined when a predetermined cutoff time has elapsed since the supply of electric power to the load 121R started. The predetermined cutoff time may be set in advance on the basis of a period usually taken by a general user to complete a single inhalation action. For example, the predetermined cutoff time may be within a range of 2 to 5 seconds.

When the user starts an inhalation action again, the control unit 50 may perform the above-described control illustrated in Fig. 7 again.

Fig. 9 is an example of a flowchart of the predetermined determination made on the basis of the value relating to the electrical resistance value of the load 121R obtained while electric power is being supplied to the load 121. In the present embodiment, the predetermined determination is authentication of the load 121R. In the authentication of the load 121R, for example, the type of load 121R attached to the connection terminals 111t can be identified, or whether the load 121R is a proper load 121R or an improper load 121R can be determined.

In a process for authenticating the load 121R, first, the control unit 50 determines whether the value relating to the resistance value of the load 121R obtained in step S208 satisfies a first condition. If the value relating to the resistance value of the load 121R satisfies the first condition, for example, the control unit 50 determines that the type of load 121R is type A (steps S302 and S304). If the value relating to the resistance value of the load 121R satisfies a second condition, on the other hand, the control unit 50 determines that the type of load 121R is type B (steps S312 and S314). Here, the first and second conditions are different from each other.

In an example, the first and second conditions may be different ranges of electrical resistance values. When the resistance value of the load 121R of type A and the resistance value of the load 121R of type B are different from each other, for example, the control unit 50 can identify the type of load 121R insofar as the first and second conditions are appropriately set in accordance with these resistance values.

The control unit 50 may perform a predetermined type of control according to a result of the authentication of the load 121R. The control unit 50 may change a type of control performed on electric power supplied to the load 121R in accordance with the type of load 121R. As described above, for example, the control unit 50 may supply electric power pulses to the load 121R with a duty ratio according to the type of load 121R (atomizing unit 120).

In this case, the memory 52 stores information that associates the value relating to the electrical resistance value of the load 121R with the load 121R. The information can be set through a preliminary experiment. The control unit 50 can authenticate the load 121R by comparing an obtained value relating to the electrical resistance value of the load 121R with the information stored in the memory 52.

If the value relating to the resistance value of the load 121R satisfies neither the first condition nor the second condition, the control unit 50 determines that there is an abnormality (step S320). In this case, the control unit 50 determines that an element different from a predetermined load 121R is connected to the connection terminals 111t. In this case, the control unit 50 inhibits the supply of electric power to the load 121R (S322). The inhibition of the supply of electric power to the load 121R preferably continues at least until removal of the load 121R is detected (S108).

Although the supply of electric power to the load 121R is inhibited in step S322, the operation to be performed is not limited to this. For example, if determining that there is an abnormality (step S320), the control unit 50 may reduce the electric power to be supplied to the load 121R, instead.

The inhibition of the supply of electric power to the load 121R may be achieved by turning off both the first switch 180 and the second switch 182. Alternatively, the inhibition of the supply of electric power to the load 121R may be achieved by a switch different from the first switch 180 or the second switch 182 or may be achieved by means such as a fuse.

The notification unit 40 may notify the user of the result of the above-described authentication of the load 121R. The notification unit 40 notifies the user of the result of the authentication of the load with, for example, at least one of light, sound, and vibration.

In particular, the control unit 50 is preferably configured to, if the result of the authentication of the load 121R is abnormal (S320), stop supplying electric power to the load 121R (step S322) and notify the user of the abnormality using the notification unit 40 (step S324). The notification unit 40 notifies the user of an abnormality in a pattern different from one used when the notification unit 40 notifies the user of detection of a proper load 121R.

(Obtaining or Estimation of Value Relating to Resistance Value of Load 1)

Next, a timing at which step S208 is performed, that is, a timing at which the value relating to the resistance value of the load 121R for authenticating the load 121R is obtained or estimated, will be described. The value relating to the resistance value obtained or estimated in step S208, for example, is used to authenticate the load 121R as illustrated in Fig. 9. The value relating to the resistance value of the load 121R, therefore, is preferably obtained or estimated with a high accuracy in step S208.

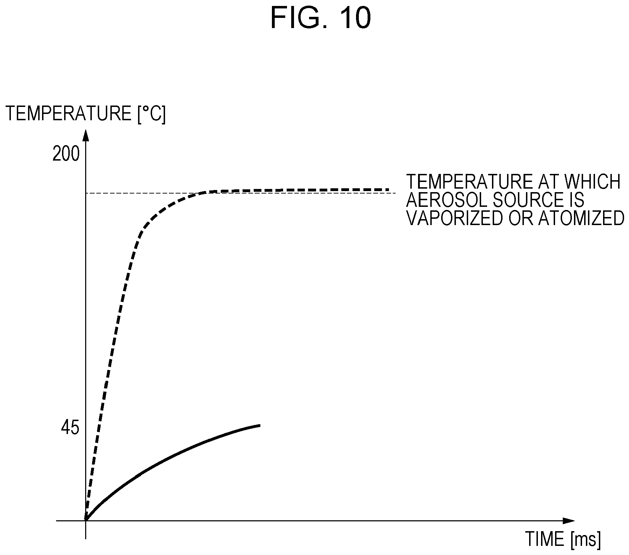

Here, as illustrated in Fig. 10, when electric power is supplied to the load 121R, the temperature of the load 121R increases over time. In Fig. 10, a broken line indicates an increase in the temperature of the load 121R at a time when electric power is supplied to the load 121R with a large current using the first switch 180. A solid line indicates an increase in the temperature of the load 121R at a time when electric power is supplied to the load 121R with a minute current using the second switch 182.

When a large current is supplied to the load 121R such as an electric heater, for example, the temperature of the load 121R rapidly increases due to Joule heat. When a minute current is supplied to the load 121R, on the other hand, the temperature of the load 121R slowly increases. Here, as the temperature of the load 121R changes, the electrical resistance value of the load 121R also changes in accordance with the temperature. In order to detect the electrical resistance value of the load 121R accurately, therefore, the control unit 50 preferably measures or estimates the electrical resistance value of the load 121R while the temperature of the load 121R is as stable as possible.

From this point of view, the control unit 50 is preferably configured to obtain the value relating to the electrical resistance value of the load 121R on the basis of a rate of change in the value relating to the electrical resistance value of the load 121R (step S208) and make the predetermined determination, such as the authentication of the load 121R, on the basis of the obtained value relating to the electrical resistance value of the load (Fig. 9).

More specifically, the control unit 50 is preferably configured to obtain the value relating to the electrical resistance value of the load 121R when the rate of change in the value relating to the electrical resistance value of the load 121R is lower than a predetermined threshold (step S208) and make the predetermined determination, such as the authentication of the load 121R, on the basis of the obtained value relating to the electrical resistance value of the load (Fig. 9). The predetermined threshold may be set in advance through an experiment in order to obtain an accurate electrical resistance value. The predetermined threshold may be, for example, 10%.

(Obtaining or Estimation of Value Relating to Resistance Value of Load 2)

Next, another example of the timing at which step S208 is performed, that is, the timing at which the value relating to the resistance value of the load 121R for authenticating the load 121R is obtained or estimated, will be described.

The control unit 50 may be configured to obtain the value relating to the electrical resistance value of the load 121R on the basis of the temperature of the load 121R (step S208) and make the predetermined determination, such as the authentication of the load 121R, on the basis of the obtained value relating to the electrical resistance value of the load (Fig. 9).

More specifically, the control unit 50 is preferably configured to obtain the value relating to the electrical resistance value of the load 121R when the temperature of the load 121R is equal to or higher than the predetermined threshold (step S208) and make the predetermined determination, such as the authentication of the load 121R, on the basis of the obtained value relating to the electrical resistance value of the load (Fig. 9). The predetermined threshold relating to the temperature of the load 121R may be set in advance through an experiment in order to obtain an accurate electrical resistance value.

As illustrated in Fig. 10, when electric power is supplied to the load 121R, the temperature of the load 121R increases over time. Insofar as there is a sufficient amount of the aerosol source, however, the temperature of the load 121R stabilizes around a predetermined temperature (hereinafter also referred to as a "highest temperature of the aerosol source reached under a normal condition" or an "aerosol generation temperature") even if the power supply 10 continues to supply electric power to the load 121R. This phenomenon occurs because thermal energy that has been used to increase the temperature of the load 121R and the aerosol source is used to vaporize the aerosol source (phase transition). When the aerosol source is composed of a single solvent, the highest temperature of the aerosol source reached under a normal condition matches a boiling point of the solvent. When the aerosol source is composed of a mixed solvent, on the other hand, the highest temperature of the aerosol source reached under a normal condition varies depending on the composition of various solvents forming the mixed solvent and a molar ratio of the various solvents.

A rate of change in the temperature of the load 121R, that is, the rate of change in the value relating to the electrical resistance value of the load 121R, therefore, becomes small when the temperature of the load 121R is equal to or higher than a predetermined threshold. The rate of change in the temperature (i.e., the rate of change in the value relating to the electrical resistance value) of the load 121R becomes small especially when the temperature of the load 121R reaches a temperature at which the flavor source or the aerosol source can be vaporized or atomized, that is, more specifically, when the temperature of the load 121R reaches the above-described highest temperature of the aerosol source reached under a normal condition or the aerosol generation temperature. The control unit 50 may therefore be specifically configured to measure the electrical resistance value of the load 121R when the temperature of the load 121R reaches a temperature at which the flavor source or the aerosol source can be vaporized or atomized. As a result, the electrical resistance value of the load 121R can be obtained while the value relating to the electrical resistance value of the load 121R is stable.

(Obtaining or Estimation of Value Relating to Resistance Value of Load 3)

Next, yet another example of the timing at which step S208 is performed, that is, the timing at which the value relating to the resistance value of the load 121R for authenticating the load 121R is obtained or estimated, will be described.

The control unit 50 may be configured to obtain the value relating to the electrical resistance value of the load 121R after a predetermined period of time has elapsed since the supply of electric power to the load 121R started (step S208) and make the predetermined determination, such as the authentication of the load 121R, on the basis of the obtained value relating to the electrical resistance value of the load (Fig. 9). In other words, the control unit 50 may be configured to obtain the value relating to the electrical resistance value of the load 121R after a predetermined period of time has elapsed since the inhalation detection unit detected an operation for requesting inhalation (step S208) and make the predetermined determination, such as the authentication of the load 121R, on the basis of the obtained value relating to the electrical resistance value of the load (Fig. 9).

After the predetermined period of time has elapsed since the supply of electric power to the load 121R started, the temperature of the load 121R increases to some extent. The control unit 50 can obtain the electrical resistance value of the load 121R while the value relating to the electrical resistance value of the load 121R is stable, especially when the predetermined period of time is set at a period of time in which the temperature at which the flavor source or the aerosol source can be vaporized or atomized is reached.

Instead of the above-described mode, the control unit 50 may be configured to obtain the value relating to the electrical resistance value of the load 121R when the number of first electric power pulses reaches a predetermined value after the supply of the first electric power pulses using the first switch 180 starts (step S208) and make the predetermined determination, such as the authentication of the load 121R, on the basis of the obtained value relating to the electrical resistance value of the load (Fig. 9). The temperature of the load 121R is supposed to increase to some extent when the number of first electric power pulses reaches the predetermined value. The control unit 50 can obtain the electrical resistance value of the load 121R while the value relating to the electrical resistance value of the load 121R is stable, especially when the predetermined value is set at a value with which the temperature at which the flavor source or the aerosol source can be vaporized or atomized is reached.

In the above-described mode, the control unit 50 may be configured to obtain the value relating to the electrical resistance value of the load 121R for every one of the first electric power pulses, instead. In this case, too, the load 121R may be authenticated using the electrical resistance value of the load 121R obtained at the above-described timing.

(Program and Storage Medium)

The flows described with reference to Figs. 6 to 9 can be performed by the control unit 50. That is, the control unit 50 may include a program for causing the power supply unit 110 and/or the flavor generating device 100 to execute the above-described methods and a storage medium storing the program.

[Other Embodiments]

Although the present invention has been described with reference to the above-described embodiment, the description and the drawings that constitute part of the present disclosure should not be interpreted as limiting the present invention. Various alternative embodiments, implementation examples, and operation techniques will become apparent to those skilled in the art from the present disclosure.

In the above-described embodiment, for example, the flavor generating device 100 includes both the aerosol source that generates aerosol and the flavor source including a tobacco material or an extract derived from a tobacco material that generates an inhaling flavor component. Alternatively, the flavor generating device 100 may include only either the aerosol source or the flavor source.

It is to be noted that the term "flavor" herein is defined as a broad concept that includes not only an inhaling flavor component generated from a flavor source but also "aerosol".

In addition, in the above-described embodiment, the electrical load 121R is configured to act upon the aerosol source and vaporize or atomize the aerosol source. Alternatively, the electrical load 121R may be configured to heat a flavor source or a flavor unit to emit a flavor. Furthermore, the electrical load 121R may be configured to heat both the aerosol source and the flavor source.

**Claims**

1. A power supply unit that supplies electric power to an electrical load which vaporizes or atomizes a flavor source or an aerosol source, the power supply unit comprising:

   a power supply;
   a control unit; and
   a connection unit that electrically connects the power supply to the load,
   wherein the control unit is configured to obtain a value relating to an electrical resistance value of the load after a predetermined period of time elapses since supply of electric power to the load or on a basis of a rate of change in the value relating to the electrical resistance value of the load, a temperature of the load, or a number of electric power pulses supplied to the load.

2. The power supply unit according to Claim 1, wherein the control unit is configured to make a predetermined determination on a basis of the obtained value relating to the electrical resistance value of the load.

3. The power supply unit according to Claim 2, wherein the predetermined determination is authentication of the load connected to the connection unit.

4. The power supply unit according to Claim 1 or 2, comprising:

   a memory storing information that associates the value relating to the electrical resistance value of the load with the load,
   wherein the control unit is configured to authenticate the load by comparing the obtained value relating to the electrical resistance value of the load with the information stored in the memory.

5. The power supply unit according to Claim 3 or 4, comprising:
   a notification unit that notifies of a result of the authentication of the load with at least one of light, sound, and vibration.

6. The power supply unit according to any one of Claims 3 to 5,
   wherein the control unit is configured to, if a result of the authentication of the load is abnormal, reduce or stop the electric power supplied to the load and notify of the abnormality through the notification unit.

7. The power supply unit according to any one of Claims 1 to 6, comprising:

   a first electric circuit configured to obtain the value relating to the electrical resistance value of the load in order to make the predetermined determination; and
   a second electric circuit which is electrically connected to the connection unit and different from the first electric circuit.

8. The power supply unit according to Claim 7, wherein an electrical resistance value of the first electric circuit is smaller than an electric resistance value of the second electric circuit.

9. The power supply unit according to Claim 7 or 8, wherein the second electric circuit includes a shunt resistor, and
   wherein a temperature-dependent change in an electrical resistance value of the shunt resistor is smaller than a temperature-dependent change in the electrical resistance value of the load.

10. The power supply unit according to any one of Claims 7 to 9,

wherein the control unit is configured to obtain, using the second electric circuit, presence or absence of connection of the load to the connection unit or the value relating to the electrical resistance value of the load connected to the connection unit.

11. The power supply unit according to any one of Claims 7 to 10,
wherein the control unit is configured to be able to estimate a remaining amount of the aerosol source or the flavor source on a basis of the value relating to the electrical resistance value of the load obtained using the second electric circuit.

12. The power supply unit according to any one of Claims 1 to 11, comprising:

an inhalation detection unit that detects an operation for requesting inhalation performed by a user,
wherein the control unit is configured to supply first electric power pulses capable of vaporizing or atomizing the flavor source or the aerosol source to the load on a basis of a signal from the inhalation detection unit.

13. The power supply unit according to Claim 12,
wherein the control unit is configured to obtain the value relating to the electrical resistance value of the load by supplying the first electric power pulses to the load.

14. The power supply unit according to Claim 12 or 13,
wherein the control unit is configured to obtain the value relating to the electrical resistance value of the load for every one of the first electric power pulses.

15. The power supply unit according to any one of Claims 12 to 14,
wherein the control unit is configured to obtain the value relating to the electrical resistance value of the load when a number of first electric power pulses reaches a predetermined value after supply of the first electric power pulses starts.

16. The power supply unit according to any one of Claims 12 to 15,
wherein the control unit is configured to supply second electric power pulses to the load in periods between the first electric power pulses, and
wherein a current value of the second electric power pulses is smaller than a current value of the first electric power pulses.

17. The power supply unit according to any one of Claims 12 to 16,
wherein the control unit is configured to obtain, using the second electric power pulses, presence or absence of connection of the load to the connection unit.

18. The power supply unit according to any one of Claims 1 to 13,
wherein the control unit is configured to measure the electrical resistance value of the load if a rate of change in the electrical resistance value of the load becomes lower than a predetermined threshold.

19. The power supply unit according to any one of Claims 1 to 13,
wherein the control unit is configured to measure the electrical resistance value of the load if the temperature of the load reaches a temperature at which the flavor source or the aerosol source can be vaporized or atomized.

20. The power supply unit according to any one of Claims 1 to 13,
wherein the control unit is configured to obtain the value relating to the electrical resistance value of the load when a number of first electric power pulses capable of vaporizing or atomizing the flavor source or the aerosol source reaches a predetermined value after supply of the first electric power pulses to the load starts.

21. A power supply unit that supplies electric power to an electrical load which vaporizes or atomizes a flavor source or an aerosol source, the power supply unit comprising:

a power supply;
a control unit; and
a connection unit that electrically connects the power supply to the load,
wherein the control unit is configured to obtain a value relating to an electrical resistance value of the load while supplying a current capable of vaporizing or atomizing the flavor source or the aerosol source to the load.

22. A flavor generating device comprising:

the power supply unit according to any one of Claims 1 to 21;
the flavor source or the aerosol source; and
an electrical load that vaporizes or atomizes the flavor source or the aerosol source.

23. A method comprising:

a step of, after a predetermined period of time elapses since electrical connection of an electrical load that vaporizes or atomizes a flavor source or an aerosol source to a connection unit that electrically connects the load to a power supply or on a basis of a rate of change in a value relating to an electrical resistance value of the load, a temperature of the load, or a number of electric power pulses supplied to the load, obtaining the value relating to the electrical resistance value of the load; and

a step of making a predetermined determination on a basis of the obtained value relating to the electrical resistance value of the load.

24. A method comprising:

a step of obtaining a value relating to an electrical resistance value of an electrical load that vaporizes or atomizes a flavor source or an aerosol source while supplying a current capable of vaporizing or atomizing the flavor source or the aerosol source to the load; and

a step of making a predetermined determination on a basis of the obtained value relating to the electrical resistance value of the load.

25. The method according to Claim 23 or 24, wherein the predetermined determination is authentication of the load connected to the connection unit.

26. A program causing an electronic device to perform the method according to any one of Claims 23 to 25.

# FIG. 1

# FIG. 2

EP 3 808 197 A1

# FIG. 3

# FIG. 4

NOTIFICATION UNIT ~40

CONTROL UNIT ~50

INHALATION SENSOR ~20

PUSHBUTTON ~30

VOLTAGE SENSOR ~150

VOLTAGE SENSOR ~152

TEMPERATURE SENSOR ~160

MEMORY

52

POWER SUPPLY ~10

LOAD

121R

120

110

# FIG. 5

## FIG. 6

DETECTION OF ATTACHMENT
AND REMOVAL

MEASURE OR ESTIMATE
ELECTRICAL RESISTANCE
VALUE BETWEEN PAIR OF
CONNECTION TERMINALS  ~S100

IS CONNECTION OF
LOAD DETECTED?  ~S102

No

Yes

POWER SUPPLY MODE
(ELECTRIC POWER CAN BE
SUPPLIED TO PAIR OF
CONNECTION TERMINALS)  ~S104

INHIBIT SUPPLY OF ELECTRIC
POWER TO PAIR OF
CONNECTION TERMINALS  ~S110

MEASURE OR ESTIMATE
ELECTRICAL RESISTANCE
VALUE BETWEEN PAIR OF
CONNECTION TERMINALS  ~S106

IS REMOVAL OF
LOAD DETECTED?  ~S108

No

Yes

# FIG. 7

POWER SUPPLY MODE

IS OPERATION FOR REQUESTING INHALATION PERFORMED BY USER DETECTED? — S200

No

Yes

ACTIVATE TIMER (T = 0) — S202

START SUPPLYING ELECTRIC POWER TO LOAD USING FIRST SWITCH — S204

OBTAIN OR ESTIMATE TEMPERATURE OF LOAD — S206

OBTAIN OR ESTIMATE VALUE RELATING TO RESISTANCE VALUE (R1) OF LOAD — S208

IS SUPPLY OF ELECTRIC POWER TO LOAD TO BE STOPPED? — S210

No

Yes

END

# FIG. 8

OUTPUT OF INHALATION SENSOR 20

FIRST SWITCH 180

SECOND SWITCH 182

TEMPERATURE OF LOAD 121R

TIME

TEMPERATURE AT WHICH AEROSOL SOURCE IS VAPORIZED OR ATOMIZED

DETECT INHALATION

AUTHENTICATION TIMING (1)

AUTHENTICATION TIMING (2)

EP 3 808 197 A1

# FIG. 9

START

S302
DOES OBTAINED VALUE RELATING TO RESISTANCE VALUE SATISFY FIRST CONDITION?

No →

Yes ↓

S312
DOES OBTAINED VALUE RELATING TO RESISTANCE VALUE SATISFY SECOND CONDITION?

No →

Yes ↓

S320
ABNORMAL

S304
DETERMINE THAT TYPE OF LOAD IS TYPE A

S314
DETERMINE THAT TYPE OF LOAD IS TYPE B

S322
INHIBIT SUPPLY OF ELECTRIC POWER TO LOAD

S324
NOTIFY OF ABNORMALITY

END

# FIG. 10

## INTERNATIONAL SEARCH REPORT

| International application No. |
| --- |
| PCT/JP2018/022762 |

A.  CLASSIFICATION OF SUBJECT MATTER
Int. Cl. A24F47/00(2006.01)i

According to International Patent Classification (IPC) or to both national classification and IPC

B.  FIELDS SEARCHED

Minimum documentation searched (classification system followed by classification symbols)
Int. Cl. A24F47/00

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2018-514191 A (PHILIP MORRIS PRODUCTS S.A.) 07 June 2018, paragraphs [0108]-[0140], fig. 1-5 & WO 2016/150922 A3, page 20, line 31 to page 27, line 12, fig. 1-5 & EP 3273809 A2 & KR 20170129710 A & CN 107427080 A | 1-6, 12-15, 18-26 |
| Y | | 7-11, 16, 17 |
| Y | JP 2017-501805 A (PAX LABS, INC.) 19 January 2017, paragraphs [0191], [0192], fig. 17B & US 2015/0208729 A1, paragraphs [0215], [0216], fig. 17B & WO 2015/100361 A1 & EP 3086671 A & KR 10-2016-0102293 A & CN 106028846 A | 7-11 |

☒  Further documents are listed in the continuation of Box C.        ☐  See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08.08.2018 | 21.08.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/022762

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-501107 A (PHILIP MORRIS PRODUCTS S.A.) 20 January 2014, paragraphs [0079]-[0086] & US 2013/0319435 A1, paragraphs [0086]-[0093] & WO 2012/085207 A1 & EP 2468116 A1 & CN 103338664 A & KR 10-2014-0004656 A | 11 |
| Y | JP 2016-513453 A (R.J. REYNOLDS TOBACCO COMPANY) 16 May 2016, paragraphs [0092]-[0095] & US 2014/0253144 A1, paragraphs [0054]-[0057] & WO 2014/138244 A1 & EP 2964037 A & CN 105163610 A | 16, 17 |
| A | JP 2017-527266 A (PHILIP MORRIS PRODUCTS S.A.) 21 September 2017, entire text, all drawings & US 2017/0150755 A & WO 2016/005602 A1 & EP 3166426 A & CN 106488714 A & KR 10-2017-0020801 A | 1-26 |
| A | JP 2016-531549 A (PIXAN OY) 13 October 2016, entire text, all drawings & US 2016/0192706 A & WO 2015/022448 A1 & EP 3032975 A & KR 10-2016-0039683 A & CN 105764365 A | 1-26 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120174914
- US 20170048928